# EUROPÄISCHE PATENTANMELDUNG

(11) **EP 1 223 370 A2**
(43) Veröffentlichungstag der Anmeldung: **17.07.2002**
(21) Anmeldenummer: 01125944.7
(22) Anmeldetag: 31.10.2001
(51) Int. Cl.: F16K 17/04, F16K 17/38

(54) **Absperrelement mit konischen Dichtflächen**

(30) Priorität: 10.01.2001 DE 10100935
(71) Anmelder: ITT Richter Chemie-Technik GmbH, D-47906 Kempen (DE)
(72) Erfinder: Sett, Manfred, 47906 Kempen (DE)
(74) Vertreter: COHAUSZ DAWIDOWICZ HANNIG & PARTNER

(57) **Zusammenfassung**

Die Erfindung betrifft Absperrelemente für ein Sicherheits- oder Überströmventil (1), insbesondere für niedrige Drücke und aggressive Medien, mit einem am Ende des Einlasses angeordneten Ventilsitz (2), auf dem abdichtend ein Ventilteller (3) eines gewichts- oder federbelasteten Dichtkörpers (4) liegt, wobei ein bestimmter Überdruck unterhalb des Ventilsitzes und/oder ein bestimmter Unterdruck über dem Ventilsitz zu einem Anheben des Dichtkörpers führt, wobei Ventilsitz und Ventilteller konische Dichtflächen aufweisen.

## Beschreibung

Die Erfindung betrifft Absperrelemente für ein Sicherheits- oder Überströmventil, insbesondere für niedrige Drücke und aggressive Medien, mit einem am Ende des Einlasses angeordneten Ventilsitz, auf dem abdichtend ein Ventilteller eines gewichts- oder federbelasteten Dichtkörpers liegt, wobei ein bestimmter Überdruck unterhalb des Ventilsitzes und/oder ein bestimmter Unterdruck über dem Ventilsitz zu einem Anheben des Dichtkörpers führt.

Niederdrucksicherheitsventile werden zur Druckabsicherung von Drucksystemen, zum Beispiel in Behältern, Kesseln, Rohrleitungen, gegen Überdruck oder Vakuum eingesetzt. Diese niedrigen Drücke liegen in einer Größenordnung von ca. 200 mbar bis 300°mbar. Die Druckabsicherung bei hochaggressiven und umweltkritischen Medien erfordert eine hermetische Abdichtung des Ventils zur Atmosphäre. Entscheidend ist die Abdichtung zwischen Ventilteller und Ventilsitz.

Üblicherweise werden Ventilsitz und Ventilteller mit planen Dichtflächen, insbesondere Kreisringflächen ausgeführt. Diese Dichtflächen können zur Steigerung der Dichtheit mit einer entsprechenden hohen Oberflächengüte gefertigt sein. Zur Erzielung dieser Oberflächengüte werden die Dichtflächen meist geläppt. Die planen Dichtflächen werden mit einer Ventilschließkraft beaufschlagt, wodurch sich entsprechend dem Traganteil der Dichtflächenpaarung eine mehr oder weniger hohe Flächenpressung einstellt, die die Abdichtung des Druckraums bewirkt.

Sicherheitsventile müssen im Fall einer Drucküberschreitung im abzusichernden Drucksystem bei Erreichen des Ansprechdrucks öffnen, den Massenstrom abführen und bei Druckabsenkung wieder schließen. Bei direktwirkenden Sicherheitsventilen wird die Ventilschließkraft durch ein Gewicht oder eine Druckfeder aufgebracht. Bei Erreichen des Ansprechdrucks steht die Ventilschließkraft im Gleichgewicht mit der durch den Druck des Mediums erzeugten hydrostatischen Kraft unter dem Ventilteller und das Ventil beginnt zu öffnen. Unter normalen Betriebsbedingungen im abzusichernden Drucksystem muss das Ventil dicht sein, um Produktverlust zu vermeiden. Der Betriebsdruck des Drucksystems wird daher in der Regel so gewählt, dass dieser kleiner oder gleich dem Schließdruck des Sicherheitsventils ist. Ist die Differenz zwischen Ventil-Ansprechdruck und Betriebsdruck des abzusichernden Systems zu gering, so reicht die Flächenpressung der Dichtfläche nicht aus und das Sicherheitsventil ist undicht. Sicherheitsventile, die auf sehr niedrige Ansprechdrücke von 200°mbar bis 300°mbar eingestellt sind, weisen eine entsprechend geringe Flächenpressung auf und neigen daher zur Undichtigkeit. Eine Erhöhung der Flächenpressung durch Verkleinerung des Dichtflächenquerschnitts führt zu einer schmaleren Dichtfläche. Diese Verkleinerung des Dichtflächenquerschnitts führt zu einer Erhöhung des Risikos, dass bereits geringfügige Beschädigungen der dichtenden Oberfläche, wie beispielsweise Kratzer, infolge von auf die Dichtfläche auftreffenden Feststoffpartikeln, sich über die gesamte Dichtflächenbreite erstrecken und das Ventil undicht wird. Bei feststoffhaltige Medien können sich auf der planen Dichtfläche Feststoffe ablagern. Diese Ablagerungen können bei planen Dichtflächen beim Schließvorgang des Ventils nicht entfernt werden und führen zu Undichtigkeiten. Es kommt nicht zu einem schabenden Effekt, wenn die Dichtflächen des Ventilsitzes und des Ventiltellers zusammengeführt werden. Bei kleinen Ventilsitzdurchmessern ist der Dichtflächenquerschnitt in der Regel so gering, dass bereits die fertigungstechnisch realisierbaren Toleranzen einen wesentlichen Einfluss auf die Dichtheit nehmen. Das abzusichernde Drucksystem kann umso wirtschaftlicher genutzt werden, je näher sein Betriebsdruck am Ansprechdruck des Sicherheitsventils liegt, ohne dass Leckage im Ventil auftritt.

Aufgabe der Erfindung ist es, die Absperrelemente für ein Sicherheits- oder Überströmventil der eingangs genannten Art so zu verbessern, dass sie im geschlossenen Zustand eine dauerhafte, hohe Dichtheit der Dichtfläche gewährleisten. Ferner ist es Aufgabe der Erfindung die Absperrelemente so zu gestalten, dass diese ohne eine zusätzliche Oberflächenbearbeitung, wie z.B. durch Läppen, eine dauerhafte, hohe Dichtheit gewährleisten, und dass die Absperrelemente ohne großen Kostenaufwand leicht zu fertigen sind.

Diese Aufgaben werden erfindungsgemäß dadurch gelöst, dass Ventilsitz und Ventilteller konische Dichtflächen aufweisen.

Durch die Konizität der Dichtflächen des Ventilsitzes und des Ventiltellers wird eine Erhöhung der Flächenpressung der Dichtfläche geschaffen, wodurch eine dauerhafte und hohe Dichtheit erreicht wird. Die Dichtheit wird durch die Erhöhung der Flächenpressung, um ein mehrfaches gesteigert, so dass eine zusätzliche kostenintensive Oberflächenbehandlung der Dichtflächen des Ventilsitzes und des Ventiltellers nicht durchgeführt werden muss.

Der Ventilteller liegt formschlüssig in dem Ventilsitz ein. Die Dichtflächen von Ventilteller und Ventilsitz weisen eine sich ergänzende konische Form auf, so dass die Dichtfläche des Ventiltellers formschlüssig an der Dichtfläche des Ventilsitzes anliegt.

Idealerweise weisen die Dichtflächen des Ventilsitzes und des Ventiltellers den gleichen konischen Neigungswinkel auf, so dass die Dichtfläche einen relativ großen Bereich einnimmt.

Vorzugsweise wird vorgeschlagen, dass sich der Außendurchmesser des Ventiltellers zu dem dem Ventilsitz zugewandten Ende verjüngt und der Innendurchmesser des Ventilsitzes zur Aufnahme des Ventiltellers zu dem dem Ventilteller zugewandten Ende zunimmt. Hierdurch kann der Ventilteller in die Öffnung des Ventilsitzes hineingleiten bis die der Ventilteller formschlüssig in dem Ventilsitz einliegt.

Vorzugsweise wird vorgeschlagen, dass der Neigungswinkel der Dichtfläche des Ventilsitzes und des Ventiltellers zwischen 10° und 20° beträgt, gemessen an der Mittelachse des Ventilsitzes bzw. des Ventiltellers. Ventilteller und Ventilsitz sind in der Regel rotationssymmetrisch ausgebildet. Hierdurch wird unter Berücksichtigung des Reibwertes der verwendeten Werkstoffpaarung gewährleistet, dass es zu keiner Selbsthemmung kommt, d.h. dass der Ventilteller sich nur unter erschwerten Bedingungen von dem Ventilsitz trennen lässt. Ein zu steiler Neigungswinkel würde zu einer Selbsthemmung führen. Bei einem Neigungswinkel der zwischen 10° und 20° liegt wird eine optimale Flächenpressung erreicht, ohne dass es zu einer Selbsthemmung kommt. Ein zu flacher Neigungswinkel würde zu keiner nennenswerten Erhöhung der Flächenpressung führen, wodurch keine erhöhte Dichtheit erzielt werden kann, im Vergleich zu einer planen Dichtfläche. Der optimale Neigungswinkel für die Dichtflächen der Ventiltellers und des entsprechenden Ventilsitzes beträgt ungefähr 15°. Hierdurch lässt sich die Flächenpressung im Vergleich zu planen Dichtflächen gleichen Querschnitts um den mehrfachen Faktor steigern. Um eine gute Dichtheit bei planen Dichtflächen zu erhalten, werden diese durch eine spezielle Oberflächenbehandlung, wie z.B. Läppen, bearbeitet. Durch die konische Ausgestaltung der Absperrelemente und die dadurch entstehende höhere Flächenpressung der Dichtflächen ist es nicht notwendig die Oberflächen der Absperrelemente zusätzlich zu Läppen, wodurch Kosten eingespart werden können.

Besonders vorteilhaft ist es, wenn der Ventilteller Polytetrafluorethylen aufweist, insbesondere hieraus besteht und der Ventilsitz modifiziertes Polytetrafluorethylen, insbesondere TFM 1600, aufweist, insbesondere hieraus besteht. Bei dieser Werkstoffpaarung wird bei einem Neigungswinkel der Dichtflächen von ungefähr 15° eine Erhöhung der Flächenpressung um den Faktor 4 erreicht, im Vergleich zu planen Dichtflächen.

Weiterhin besonders vorteilhaft ist es, wenn der Ventilteller eine kegel- oder pyramidenförmige bzw. kegelstumpf- oder pyramidenstumpfförmige Form aufweist. Hierdurch wird ein leichtes Einführen des Ventiltellers in den Ventilsitz gewährleistet. Insbesondere kegelförmige bzw. kegelstumpfförmige Formen sind für Gestaltung des Ventiltellers vorteilhaft, da dadurch eine kreisrunde Dichtfläche entsteht, die eine besonders gute Dichtheit schafft. Weiterhin ist es kostengünstig kegelförmige bzw. kegelstumpfförmige Ventilteller zu fertigen.

Durch die konische Gestaltung der Absperrelemente, insbesondere im Dichtbereich des Ventilsitzes, kommt es zu keiner Ablagerung von Feststoffen in diesem Bereich. Gerade ein Neigungswinkel der konischen Dichtfläche von 10° bis 20° bewirkt, dass die Feststoffpartikel keinen Halt finden. Durch die Verwendung von Kunststoffbeschichtungen, wie beispielsweise PTFE, PFA, FEP etc., wird der Effekt noch verstärkt, dass Feststoffpartikel keinen Halt an der Dichtfläche finden.
Die konische Gestaltung des Ventiltellers wirkt beim Schließvorgang wie ein Schaber, so dass hierdurch Feststoffpartikel, die sich in der Nähe der Dichtfläche des Ventilsitzes befinden, entfernt werden.

Die erfindungsgemäßen Absperrelemente sind insbesondere für Niederdrucksicherheits- oder Niederdrucküberströmventile einsetzbar. Anlagen in denen Drücke unter 1 bar herrschen, sind besonders geeignet für den Einsatz solcher erfindungsgemäßen Sicherheitsventile. Gerade, wenn die Differenz zwischen Betriebsdruck und Ansprechdruck des Ventils sehr gering ist, d.h. unter 0,1 bar liegt, ist die Verwendung dieser erfindungsgemäßen Absperrelemente von großem Vorteil. Durch die erhöhte Flächenpressung treten keine Leckagen auf. Durch die konische Form beider Absperrorgane ist es, trotz erhöhter Flächenpressung an der Dichtfläche, möglich, dass das Ventil auf kleinste Druckdifferenzen reagiert.

Weiterhin ist diese Art der Absperrelemente für Medien mit Feststoffanteilen vorteilhaft, da durch die Gestaltung der Absperrelemente, d.h. die konische Neigung der Dichtflächen die Feststoffpartikel leicht von der Dichtfläche entfernt werden können.

Weitere Einzelheiten und Vorteile des Erfindungsgegenstandes ergeben sich aus der nachfolgenden Beschreibung, den zugehörigen Zeichnungen, in der bevorzugte Ausführungsbeispiele mit den dazu notwendigen Einzelheiten dargestellt sind. Es zeigen:
- Fig. 1:: Niederdrucksicherheits- bzw. Überströmventil mit konischen Dichtflächen der Absperrelemente,
- Fig. 2:: Ventilteller und Ventilsitz im geschlossenen Zustand,
- Fig. 3:: vergrößerte Darstellung der konischen Dichtfläche von Ventilteller und Ventilsitz,
- Fig. 4:: vergrößerte Darstellung der Dichtfläche von Ventilteller und Ventilsitz sowie Neigungswinkel der konischen Dichtfläche.

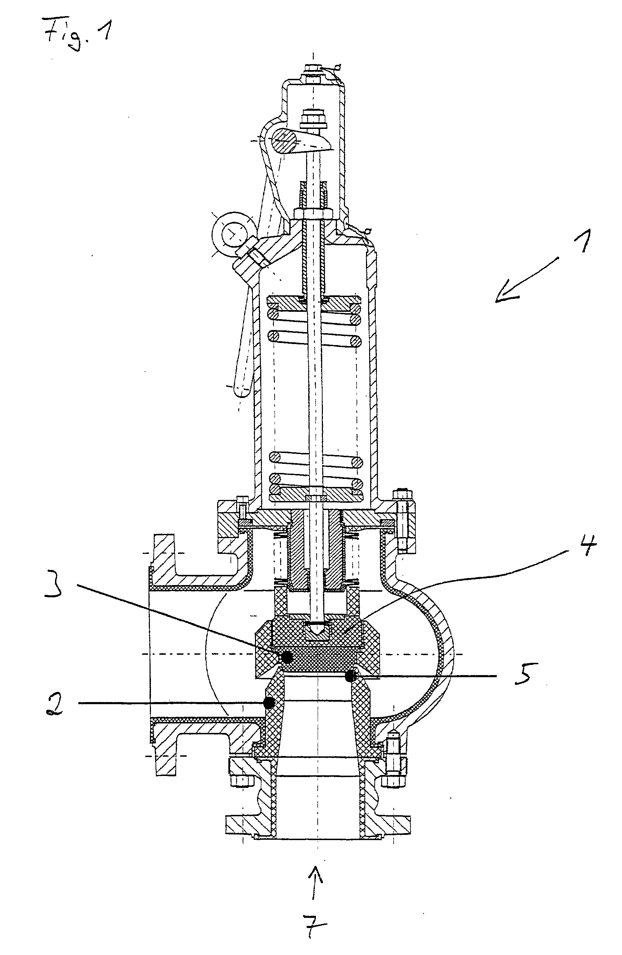

Fig. 1 zeigt ein Niederdrucksicherheits- bzw. Niederdrucküberströmventil mit konischen Dichtflächen (5) von Ventilteller (3) und Ventilsitz (2). Am Ende des Einlasses (7) ist der Ventilsitz (2) angeordnet, auf dem abdichtend ein Ventilteller (3) eines gewichts- oder federbelasteter Dichtkörpers (4) liegt. Ein bestimmter Überdruck unterhalb des Ventilsitzes (2) und/oder ein bestimmter Unterdruck über dem Ventilsitz (2) führt zu einem Anheben des Dichtkörpers (4), wodurch das entsprechende Medium durch das Ventil (1) strömen kann. Der Ventilteller (3) liegt in dieser Fig. 1 mit seiner Dichtfläche (5) an der Dichtfläche (5) des Ventilsitzes (2) formschlüssig an. Im geschlossenen Zustand liegt die Dichtfläche des Ventiltellers (3) dabei exakt auf der Dichtfläche des Ventilsitzes (2). In diesem Zustand ist das Niederdrucksicherheits- bzw. Überströmventil (1) absolut dicht. Das Medium, welches durch den Einlass (7) in das Niederdrucksicherheits- bzw. Niederdrucküberströmventil (1) kann nicht durch dieses hindurchströmen.

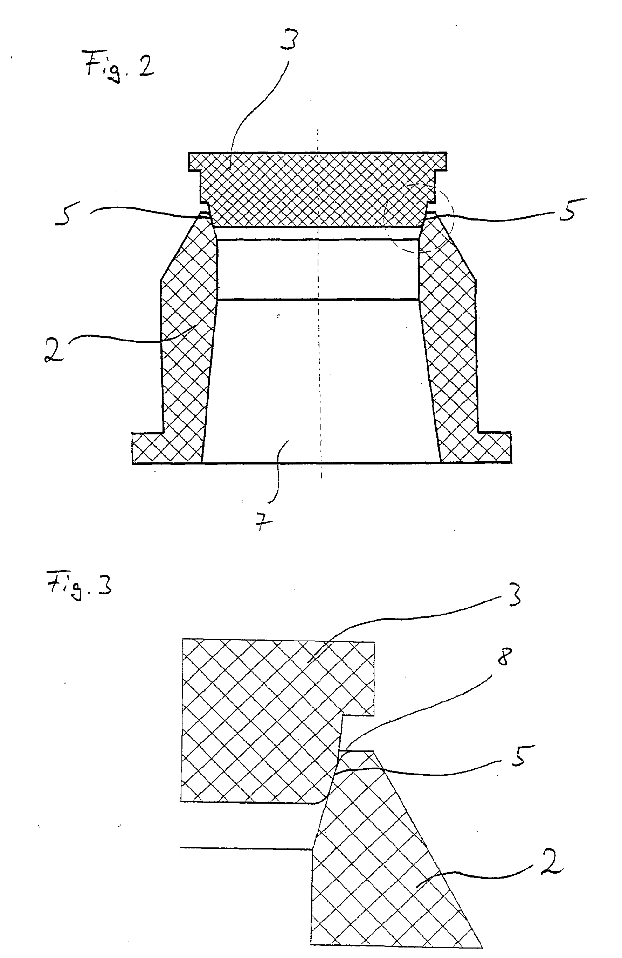

In der Fig. 2 ist der am Ende des Einlasses (7) angeordnete Ventilsitz (2) dargestellt. Der Ventilsitz (2) besitzt vorzugsweise eine rotationssymmetrische Form. Die Dichtfläche (5) des Ventilsitzes (2) ist entsprechend rotationssymmetrisch ausgestalten. Dies ermöglicht auf einfache Art und Weise eine formschlüssige Aufnahme eines entsprechend rotationssymmetrisch, kegelförmig ausgebildeten Ventiltellers (3). Fig. 2 zeigt die Absperrelemente im abdichtendem Zustand, d.h. die Dichtflächen (5) des Ventilsitzes (2) und des Ventiltellers (3) liegen aneinander. Andere Formen des Ventilsitzes (2) und entsprechend des Ventiltellers (3) sind ebenfalls möglich. So kann die Öffnung des Ventilsitzes (2) auch eckige Formen aufweisen. Der Ventilteller (3) weist dann eine entsprechende eckige Form auf, so das dieser formschlüssig in den Ventilteller (3) einbringbar ist. Die Form des Ventiltellers (3) kann kegel- bzw. pyramidenförmig sein, wobei sich der Außendurchmesser des Ventiltellers (3) zu dem dem Ventilsitz (2) zugewandten Ende verjüngt.

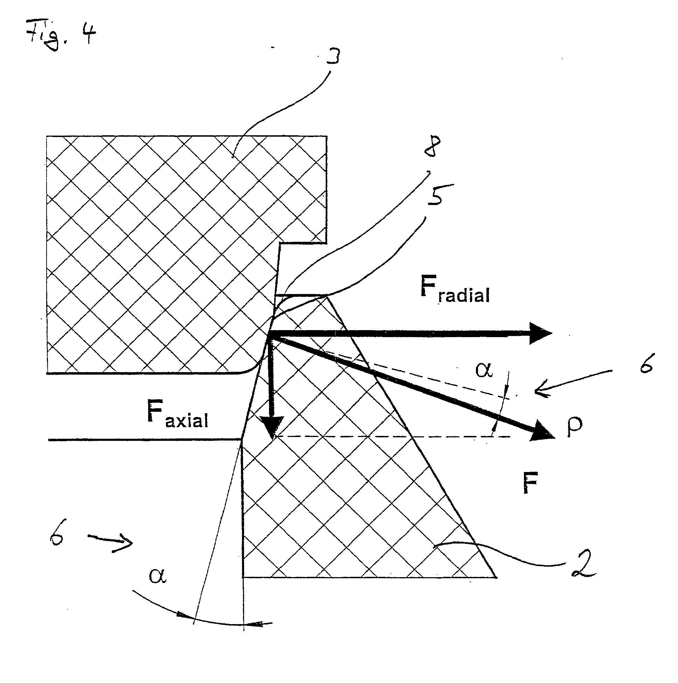

In den Fig. 3 und 4 ist der Bereich der Dichtfläche des Ventilsitzes (2) und des Ventiltellers (3) deutlich vergrößert dargestellt. Der obere Randbereich (8) des Ventilsitzes (2), der oberhalb der konischen Dichtfläche (5) liegt, ist abgerundet. Dies erleichtert das Einführen des Ventiltellers (3) in die Öffnung des Ventilsitzes (2). Ein leichtes Hineingleiten des Ventiltellers (3) in die Öffnung des Ventilsitzes (2) ist durch die Krümmung des Randbereichs (8) gegeben.
Der Neigungswinkel α (6) hat idealerweise einen Wert zwischen 10° und 20°. Durch die konische Gestaltung der Dichtflächen (5) des Ventiltellers (3) und des Ventilsitzes (2) wird die Kraft F, die auf die Dichtfläche (5) wirkt, in eine radiale und eine axiale Komponente aufgeteilt, wobei die radiale Komponente aufgrund des Neigungswinkels α (6) den größeren Anteil der Kraft F einnimmt. Im Vergleich zu einer planen Dichtfläche ist bei diesen konischen ausgebildeten Dichtflächen (5) des Ventiltellers (3) und des Ventilsitzes (2) eine mehrfach höhere Flächenpressung erreichbar, wodurch eine dauerhaftere und dichtere Abdichtung zwischen Ventilteller und Ventilsitz gegeben ist.

## Patentansprüche

1. Absperrelemente für ein Sicherheits- oder Überströmventil (1), insbesondere für niedrige Drücke und aggressive Medien, mit einem am Ende des Einlasses (7) angeordneten Ventilsitz (2), auf dem abdichtend ein Ventilteller (3) eines gewichts- oder federbelasteten Dichtkörpers (4) liegt, wobei ein bestimmter Überdruck unterhalb des Ventilsitzes (2) und/oder ein bestimmter Unterdruck über dem Ventilsitz (2) zu einem Anheben des Dichtkörpers (4) führt, **dadurch gekennzeichnet, dass** Ventilsitz (2) und Ventilteller (3) konische Dichtflächen (5) aufweisen.

2. Absperrelemente nach Anspruch 1, **dadurch gekennzeichnet, dass** der Ventilteller (3) formschlüssig im Ventilsitz (2) einliegt.

3. Absperrelemente nach Anspruch 1 und 2, **dadurch gekennzeichnet, dass** die Dichtflächen (5) des Ventilsitzes (2) und des Ventiltellers (3) den gleichen konischen Neigungswinkel (6) aufweisen.

4. Absperrelemente nach einem der vorherigen Ansprüche, **dadurch gekennzeichnet, dass** der Innendurchmesser des Ventilsitzes (2) zur Aufnahme des Ventiltellers (3) zu dem dem Ventilteller (2) zugewandten Ende zunimmt.

5. Absperrelemente nach einem der vorherigen Ansprüche, **dadurch gekennzeichnet, dass** sich der Außendurchmesser des Ventiltellers (3) zu dem dem Ventilsitz (2) zugewandten Ende verjüngt.

6. Absperrelemente nach einem der vorherigen Ansprüche, **dadurch gekennzeichnet, dass** der Neigungswinkel (6) der Dichtfläche (5) des Ventilsitzes (2) und des Ventiltellers (3) zwischen 10° und 20° beträgt, gemessen an der Mittelachse des Ventilsitzes (2).

7. Absperrelemente nach einem der vorherigen Ansprüche, **dadurch gekennzeichnet, dass** der Ventilteller (3) Polytetrafluorethylen aufweist, insbesondere hieraus besteht.

8. Absperrelemente nach einem der vorherigen Ansprüche, **dadurch gekennzeichnet, dass** der Ventilsitz (2) modifiziertes Polytetrafluorethylen, insbesondere TFM 1600, aufweist, insbesondere hieraus besteht.

9. Absperrelemente nach einem der vorherigen Ansprüche, **dadurch gekennzeichnet, dass** der Ventilteller (3) eine kegel- oder pyramidenförmige bzw. kegelstumpf- oder pyramidenstumpfförmige Form aufweist.
